# EUROPÄISCHE PATENTSCHRIFT

(11) **EP 1 974 845 B1**
(45) Veröffentlichungstag und Bekanntmachung des Hinweises auf die Patenterteilung: **23.09.2009**
(21) Anmeldenummer: 08151583.5
(22) Anmeldetag: 18.02.2008
(51) Int. Cl.: B23K 9/067

(54) **Verfahren zum manuellen Zünden eines Löt- oder Schweißlichtbogens**
Method for manually igniting a welding or soldering arc
Procédé d'allumage manuel d'un arc lumineux de soudure ou de brasure

(30) Priorität: 30.03.2007 DE 102007015835
(43) Veröffentlichungstag der Anmeldung: 01.10.2008
(73) Patentinhaber: EWM Hightec Welding GmbH, 56271 Mündersbach (DE)
(72) Erfinder: Goecke, Sven-Frithjof, Dr., 56244 Steinen (DE); Knopp, Norbert, Dipl.-Ing., 56337 Arzbach (DE)

(56) Entgegenhaltungen:
- DE-U1- 9 013 550
- US-A- 3 141 085
- US-B1- 6 570 131

## Beschreibung

Die Erfindung betrifft ein Verfahren zum manuellen Zünden eines Löt- oder Schweißlichtbogens, insbesondere für MIG/MAG-Schweißverfahren, mit einer lediglich in eine Richtung fördernden Drahtvorschubvorrichtung, bei der eine abschmelzende Drahtelektrode, welche von zumindest einer geregelten Energiequelle mit Energie versorgt wird, in Richtung des Werkstücks bewegt wird, bis diese das Werkstück berührt.

Die US-B1-6570131 offenbart ein Zündverfahren mit anschließendem eigentlichen Schweißprozess, bei dem ein Lichtbogen mittels einer sekundären Stromquelle (100) zwischen der Elektrode (E) und dem Werkstück (W) gezündet und nach Erreichen eines Referenzwertes eine Hauptstromquelle (30) für den eigentlichen Schweißprozess zugeschaltet wird. Zu diesem Zweck werden Strom und Spannung messtechnisch erfasst und aus den gewonnen Daten die elektrische Leistung ermittelt, um über eine bestimmte Zeitdauer (T₂ - T₃) einen für die Erwärmung von Drahtelektrode (E) und Werkstück (W) repräsentativen Wert zu bestimmen. Dieser Wert wird mit einem Referenzwert (190) verglichen und sobald dieser erreicht oder überschritten ist, wird die Prozessleistung geändert.

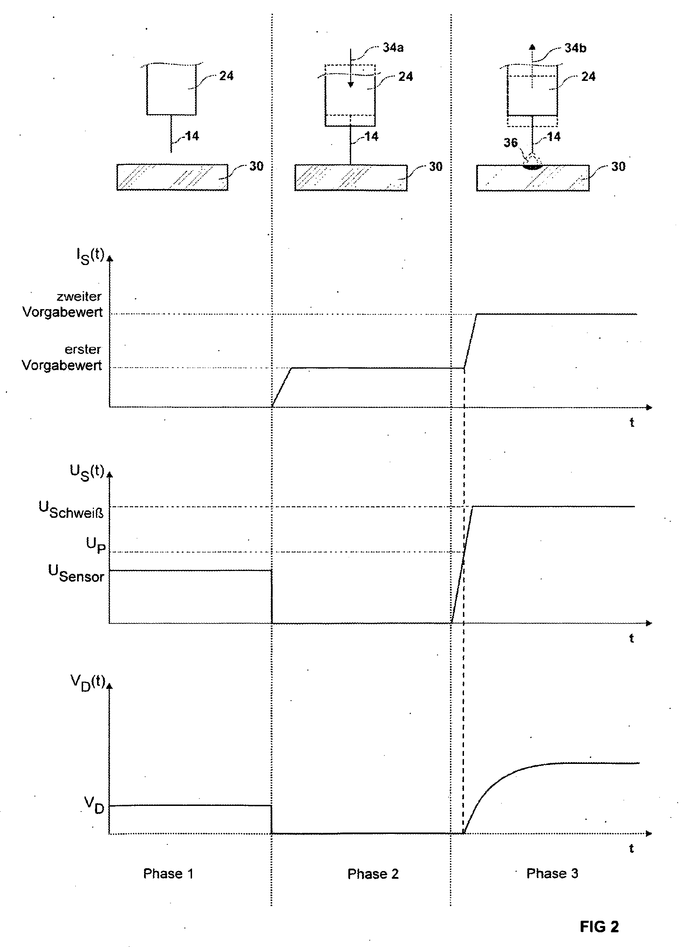

Der Ablauf eines derartigen Verfahrens ist anhand des Ausführungsbeispiels in Fig. 2 dargestellt.

Gezeigt werden hier die Verfahrensschritte I bis IV zu den Zeitpunkten T₀ bis T₃ sowie der Spannungsverlauf (150), der Stromverlauf (152) und die eingebrachte Wärme (156). Zu diesem Zeitpunkt T₀ liegt zwischen der Elektrode (E) und dem Werkstück (W) eine so genannte Leerlaufspannung an und es fließt kein Strom. Mit Berührung des Werkstücks mit der Elektrode (E) zum Zeitpunkt T₁ bricht die Spannung auf ein gegenüber der Leerlaufspannung (150) niedriges Niveau ab und ein geringer Strom (152) fließt zwischen der Elektrode (E) und dem Werkstück (W). Aus dem momentanen Strom- und Spannungswert wird nun mit Hilfe einer Multiplikatorschaltung (160) die elektrische Leistung (154) ermittelt. Durch eine der Multiplikatorschaltung (160) nachgeschalteten Integrationsschaltung (170) werden Werte errechnet, welche in Bezug auf die eingebrachte Wärme repräsentativen Werte (156) darstellen, welche mit einem Referenzwert (190) verglichen werden. Zum Zeitpunkt T₂ wird die Elektrode (E) vom Werkstück (W) wegbewegt und ein Lichtbogen geringer Leistung gezündet. Infolge dessen erhöht sich die Spannung (150) bei gleichem Strom, wodurch sich die Leistung auf ein Niveau (154a) erhöht. Bis zum Zeitpunkt T₃ steigt die eingebrachte Wärme (156) immer weiter an, bis diese einen Wert entsprechend dem Referenzwert (190) erreicht. Mit dem Erreichen des Referenz- wertes (Fig. 2, Punkt 204) zum Zeitpunkt T₃ wird der Schweißprozess dann letztlich eingeleitet, indem die Hauptstromquelle (30) eingeschaltet und der Strom- und/oder Spannungswert auf einen dem Schweißprozess entsprechenden Wert geändert wird.

Unter Berücksichtigung der US-B1-6570131 liegt der vorliegenden Erfindung die Aufgabe zu Grunde, ein sicheres Zünden des Lichtbogens (36) unter Vermeidung von Schweißspritzern zu ermöglichen. Das sichere Zünden wird erreicht, indem durch ein manuelles Zurückziehen der Drahtelektrode (14) ein erster Vorgabewert, welcher einer geringen Leistung entspricht um ein Anhaften der Elektrode (14) zu verhindern, auf einen zweiten Vorgabewert geändert wird. Durch die Änderung auf den zweiten Vorgabewert wird der eigentliche Schweißprozess in Gang gesetzt, indem Strom und Spannung erhöht werden und die Drahtelektrode (14) gefördert wird.

Schweißverfahren können für das Verbinden von metallischen und nichtmetallischen Werkstoffen angewendet werden. Zu den am meisten angewendeten Schweißverfahren für das Verbinden von metallischen Werkstoffen gehören unter anderem das Wolfram-Inertgas-Schweißen (WIG) und das Metall-Inertgas-Schweißen (MIG) beziehungsweise das Metall-Aktivgas-Schweißen (MAG). Bei diesen Schweißverfahren erfolgt die Wärmeeinbringung mittels eines in einer geschützten Atmosphäre erzeugten Lichtbogens, wobei die dafür benötigte Energie von einer externen Stromquelle zur Verfügung gestellt wird. Der wesentliche Unterschied zwischen den genannten Schweißverfahren besteht darin, dass beim WIG-Schweißen der Lichtbogen zwischen einer nicht abschmelzenden Wolfram- Elektrode und einem Werkstück erzeugt wird, wohingegen beim MAG- oder MIG-Schweißen eine im Lichtbogen abschmelzende drahtförmige Elektrode einem Schmelzbad maschinell zugeführt wird.

Das MAG- und MIG-Schweißverfahren wird zusammenfassend auch als Metall-Schutzgas-Schweißverfahren (MSG) bezeichnet. Beim MSG-Schweißen strömt Schutzgas aus einer Düse am Brenner aus, welche die Drahtelektrode konzentrisch umgibt und das Schmelzbad beim Zünden des Lichtbogens und während des Schweißprozesses vor dem Zutritt atmosphärischer Gase wie Sauerstoff, Wasserstoff und Stickstoff schützt. Dabei werden das Werkstück und die durch eine Drahtvorschubvorrichtung transportierte Drahtelektrode mittels einer Stromkontaktdüse im Schweißbrenner mit Energie versorgt.

Die für einen derartigen Prozess benötigte Energie wird durch eine externe Energiequelle zu Verfügung gestellt. Dafür werden in der Praxis überwiegend so genannte Inverter als Schweißenergiequelle eingesetzt, welche den aus dem öffentlichen Netz kommenden Strom zunächst gleichrichten und danach, damit er transformierbar wird, durch Ein- und Ausschalten der Energiezufuhr in Abschnitte "zerteilen". Diesen Vorgang nennt man Takten, wodurch ein stufenloses Regeln der Schweißenergiequelle möglich ist. Mit einer derartig geregelten Energiequelle können beispielsweise vorgegebene Parameter mit messtechnisch erfassten Schweißparametern verglichen und durch eine dynamische Regelung an den Schweißprozess angepasst werden. Dazu werden beispielsweise die Stromstärke und die Spannung sekundärseitig der Schweißenergiequelle, im sogenannten Schweißkreis, messtechnisch erfasst.

Für die Einleitung eines Schweißprozesses wird zwischen der Drahtelektrode und dem Werkstück ein Lichtbogen gezündet, wobei prinzipiell zwischen einer berührungsfreien Zündung und einer Kurzschlusszündung unterschieden werden kann. Beim MSG-Schweißverfahren erfolgt die Zündung des Lichtbogens bauartbedingt vorzugsweise mit Hilfe der Kurzschlusszündung. Dazu wird die Drahtelektrode mit dem Werkstück in Verbindung gebracht, wodurch ein Kurzschluss entsteht, welcher die Lichtbogen Zündung auslöst. Aufgrund der zum Zeitpunkt des Kurzschlusses auftretenden hohen Stromstärken kommt es meist zur explosionsartigen Abplatzen eines Schweißdrahtstückes, großer Spritzerbildung oder Drahtvorschubstörungen durch Abknicken des Schweißdrahtes.

In der Vergangenheit hat man dieses Problem zu lösen versucht, indem die Drahtelektrode nach der Berührung mit dem Werkstück automatisch zurückgezogen wird, wobei nach dem Zünden des Lichtbogens, zur Durchführung eines Schweißprozesses, die Drahtelektrodenbewegung erneut umgekehrt wird. Dabei erfolgt die Reversierung der Elektrodenbewegung von Vorschub auf Rückzug und umgekehrt, mittels der Drahtvorschubvorrichtung automatisiert in Abhängigkeit von einer gemessenen Spannung im Schweißkreis.

Um unkontrolliert hohe Ströme während der Kurzschlussphase zu verhindern, wird z.B. zunächst eine Energiequelle mit geringer Leistung eingeschaltet und erst nach einem erneuten Richtungswechsel der Bewegung der Drahtelektrode, die Leistung zum Abschmelzen der Elektrode erhöht. Dabei erfolgen die Erhöhung der Leistung und das Reversieren der Drahtelektrode nach Erreichen einer bestimmten Lichtbogenlänge, welche mittels Messung von Stromstärke und/oder Spannung im Schweißkreis oder mittels Messung der Strecke des Rückhubes der Drahtelektrode erfasst wird.

Derartige Verfahren ermöglichen ein relativ sicheres Zünden des Lichtbogens, indem für die Dauer des Zündvorgangs die Stromstärke geregelt wird und die Drahtelektrode mittels Drahtvorschubvorrichtung automatisch zuerst zum Werkstück hin und nach Berührung mit dem Werkstück von diesem wegbewegt wird, wobei nach Erreichen einer bestimmten Lichtbogenlänge die Drahtelektrode für den eigentlichen Schweißvorgangs wieder in Richtung des Werkstücks bewegt wird. Solche Verfahren können jedoch nur in Verbindung mit einer Drahtvorschubvorrichtung angewendet werden, welche mittels einer geeigneten Regelung oder Steuerung die Bewegung der Drahtelektrode zum Lichtbogenzünden mehrmals reversiert.

Um dabei die Umkehrdauer der Drahtvorschubbewegung möglichst gering zu halten und einen effektiven Transport der Elektrode zu ermöglichen, sind zudem zwei getrennt voneinander angeordnete Drahtvorschubvorrichtungen erforderlich, wobei üblicherweise eine zweite Drahtvorschubvorrichtung am Schweißbrenner angeordnet ist. Damit können jedoch derartige Verfahren zum Zünden eines Lichtbogens, aufgrund der damit verbundenen größeren Bauform und des höheren Gewichtes des Schweißbrenners, fast ausschließlich nur in automatisierten Anwendungen eingesetzt werden. Zudem ist der Verschleiß der Drahtvorschubvorrichtungen aufgrund der ständigen Richtungsumkehr relativ hoch, wodurch letztendlich auch die Wartungsintervalle der gesamten Schweißvorrichtung verkürzt werden müssen, was wiederum zu einer Kostenerhöhung führt.

Wünschenswert wäre jedoch ein Verfahren, bei dem ein manuelles Zünden des Schweißlichtbogens ermöglicht wird, ohne dass dabei die Bewegungsrichtung der Schweißelektrode durch eine Drahtvorschubvorrichtung mehrmals geändert werden muss. Weiterhin sollte ein derartiges Verfahren ohne hohen Kostenaufwand realisiert und mit unterschiedlichen Schweißvorrichtungen durchgeführt werden können. Die bekannten Verfahren der oben genannten Art sind dazu jedoch nur unzureichend geeignet, da einerseits nur bei bestimmten Schweißvorrichtungen überhaupt die Möglichkeit zur automatisierten Richtungsumkehr besteht und andererseits derartige Verfahren, aufgrund der dafür erforderlichen speziellen Ausführungsform des Schweißbrenners, nur in automatisierten Bereichen angewendet werden können.

Der Erfindung liegt daher die Aufgabe zu Grunde, ein Verfahren anzugeben, mit dem ein sicheres Zünden unter Vermeidung von Schweißspritzern auch in nicht automatisierten Bereichen ermöglicht wird.

Diese Aufgabe wird erfindungsgemäß dadurch gelöst, indem die Bewegung der Drahtelektrode bei Berührung mit dem Werkstück gestoppt wird und nachfolgend ein Strom- und/oder Spannungswert, ausgehend von einem ersten Vorgabewert, welcher charakteristisch für die Berührung der Drahtelektrode mit dem Werkstück ist, auf einen zweiten Vorgabewert geändert wird, wobei diese Strom- und/oder Spannungsänderung durch ein manuell bewirktes Zurückziehen der Drahtelektrode vom Werkstück ausgelöst wird.

Zur Durchführung des Verfahrens werden das Werkstück und die Drahtelektrode mittels einer geregelten Energiequelle mit Energie versorgt. Dabei wird die Drahtelektrode auf das Werkstück bis zur Berührung zubewegt, wobei die Berührung beispielsweise mittels mindestens eines geeigneten Detektormittels registriert wird. Dazu können Abstandssensoren verwendet werden, welche mit Licht, Infrarotstrahlung, Radiowellen oder Ultraschall arbeiten. Weiterhin kann die Detektierung der Berührung der Drahtelektrode mit dem Werkstück durch Messen der Stromstärke und/oder Spannung im Schweißkreis erfolgen.

Nach der Berührung der Drahtelektrode mit dem Werkstück wird die Bewegung der Drahtelektrode gestoppt. Dadurch entsteht im Schweißkreis ein Kurzschluss. Infolge dessen wird die Leistung der Schweißenergiequelle entsprechend eines ersten Vorgabewertes eingestellt. Erst nach dem Zurückziehen der Elektrode vom Werkstück, wodurch der Kurzschluss wieder aufgelöst wird, kommt es zunächst zur Zündung eines Lichtbogens und danach zur Auslösung der Änderung der Stromstärke- und/oder Spannung auf den zweiten Vorgabewert. Der erste und auch der zweite Vorgabewert sind dabei vorzugsweise frei wählbar. Das Zurückziehen der Drahtelektrode und damit auch das Einleiten der Strom- und/oder Spannungsänderung erfolgt dabei nicht mechanisiert.

Vorzugsweise wird die Drahtelektrode mittels eines Handschweißbrenner geführt und/oder gehalten, wobei das Auslösen der Strom- und/oder Spannungsänderung dadurch erfolgt, indem der Handschweißbrenner und damit auch die Drahtelektrode vom Werkstück wegbewegt wird. Die Rückwärtsbewegung der Elektrode erfolgt somit vorteilhafter Weise ausschließlich manuell ohne Einschalten der Drahtvorschubvorrichtung.

Um zu verhindern, dass während die Elektrode das Werkstück berührt, diese angeschmolzen wird, sollte der erste Vorgabewert entsprechend gering gehalten werden. Dadurch wird erreicht, dass die Drahtelektrode nicht an der Oberfläche des Werkstücks anhaften und ein Zurückziehen des Handbrenners erfolgen kann. Dazu wird bevorzugt eine Stromstärke zwischen 5 Ampere und 50 Ampere eingestellt.

Der zweite Vorgabewert wird vorzugweise entsprechend einem für einen Schweißvorgang charakteristischen Wert eingestellt. Das heißt, die Spannung und/oder Stromstärke werden so eingestellt, dass im Lichtbogen ein Aufschmelzen des Werkstücks und ein Abschmelzen der Drahtelektrode erfolgt. Dazu wird zwischen dem Werkstück und der Drahtelektrode bevorzugt eine Spannung zwischen 12 Volt und 40 Volt angelegt und/oder eine Stromstärke zwischen 50 Ampere und 500 Ampere eingestellt.

Die Strom- und/oder Spannungsänderung ausgehend vom ersten Vorgabewert auf den zweiten Vorgabewert, wird durch das manuelle Zurückziehen der Drahtelektrode ausgelöst, indem der Abstand der Drahtelektrode zum Werkstück vorzugsweise durch das Messen der Spannung und/oder Stromstärke im Schweißkreis erfasst wird. Nach Erreichen einer bestimmten gemessenen Stromstärke- und/oder Spannung, wird die durch die Vorgabewerte charakterisierte Strom- und/oder Spannungsänderung ausgelöst. Beispielsweise findet eine Messung der Spannung mittels einer Spannungsmessvorrichtung in der Energiequelle statt, wobei nach Erreichen eines bestimmten gemessenen Spannungswertes, welcher charakteristisch für den Abstand der Elektrodenspitze zum Werkstück ist, die Strom und/oder Spannungsänderung, ausgehend vom ersten Vorgabewert auf den zweiten Vorgabewert, ausgelöst wird.

Besonders bevorzugt erfolgt die Erfassung der Messwerte synchronisiert mit der Taktfrequenz der Schweißenergiequelle, vorzugsweise in der Pulspause der Inverterspannung. Alternativ oder ergänzend zur Messung der Spannung und/oder Stromstärke kann auch der Quotient von Schweißspannung und Schweißstrom, also der Widerstand als repräsentativer Messwert oder die Schweißleistung erfasst werden.

Nach Erreichen eines bestimmten Wertes, nachfolgend auch als Auslösewert bezeichnet, welcher vorzugsweise dem für eine Auslösung der Strom- und/oder Spannungsänderung maßgeblichen Wert entspricht, erfolgt die Auslösung der Drahtförderung in Richtung des Werkstücks mittels der Drahtvorschubvorrichtung. Dabei sollte beachtet werde, dass eine für den Zünd- und/oder Schweißprozess maßgebliche Bewegung der Drahtelektrode am Ausgang des Brenners, bezüglich des Auslösezeitpunktes der Elektrodenbewegung, zeitlich versetzt erfolgen kann. Derartige Verzögerungen können systembedingt durch Regelungsabläufe und/oder bauartbedingt durch unterschiedliche Toleranzen der einzelnen Komponenten der Schweißvorrichtung entstehen.

Diese zeitversetzte Drahtelektrodenbewegung sollte bei der Einstellung der einzelnen Parameter berücksichtigt werden. Dabei kann die in Bezug auf die Spannungs- und/oder Stromstärkeerhöhung verzögerte Drahtbewegung am Brennerausgang, beispielsweise durch ein zeitversetztes Einschalten der Drahtvorschubvorrichtung und/oder durch die Änderung des Auslösewertes, bei dessen Erreichung die Drahtförderung ausgelöst werden soll, beeinflusst werden.

Bevorzugt sind jedoch die Parameter und der Auslösewert so zu wählen, dass die werkstücksseitige Drahtförderung zeitlich versetzt nach der Änderung vom ersten Vorgabewert auf den zweiten Vorgabewert erfolgt. Somit wird einerseits eine Berührung der Drahtelektrode mit dem Werkstück, insbesondere ein Eintauchen der Elektrodenspitze in das Schmelzbad und andererseits eine vermehrte Spritzerbildung effektiv verhindert.

Selbstverständlich kann das erfindungsgemäße Verfahren zum Zünden eines Lichtbogens auch für MSG-Lötverfahren eingesetzt werden. Im wesentlichen Unterschied zum MSG-Schweißverfahren wird dabei eine Drahtelektrode verwendet, welche einen niedrigeren Schmelzpunkt als der Grundwerkstoff aufweist.

Die mit der Erfindung erzielten Vorteile bestehen insbesondere darin, dass ein derartiges Arbeitsverfahren mit relativ geringen Kosten realisiert werden kann. Zudem können die in der Industrie üblichen wesentlich kostengünstigeren Handschweißbrenner eingesetzt werden, welche außerdem besser zu handhaben sind, da diese keine zusätzliche Drahtfördervorrichtung im Brenner aufweisen müssen.

Ein Ausführungsbeispiel der Erfindung wird anhand einer Zeichnung näher erläutert. Darin zeigen:
- FIG 1: eine schematische Darstellung einer Vorrichtung zum MSG-Schweißen,
- FIG 2: den zeitlichen Verlauf von Stromstärke, Spannung und Drahtvorschubgeschwindigkeit.

Gleiche Teile sind in beiden Figuren mit denselben Bezugszeichen versehen.

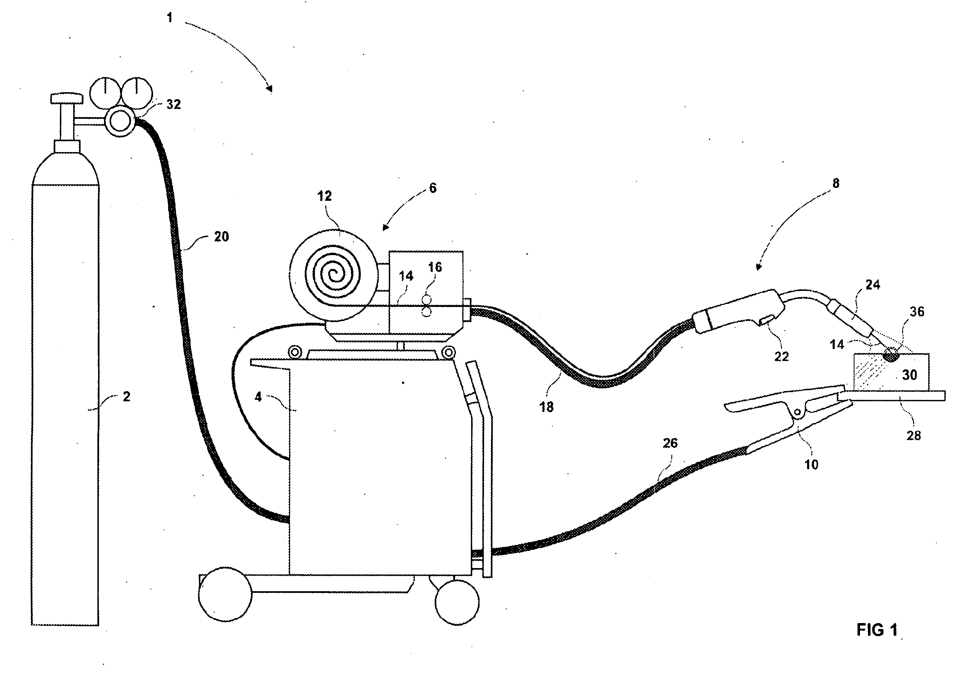

Die FIG 1 zeigt eine Vorrichtung zum MSG-Schweißen 1, bestehend aus einem Schutzgasspeicher 2, einer geregelte Schweißenergiequelle 4, einer Drahtvorschubvorrichtung 6, einem Handschweißbrenner 8 und einer Kontaktzange 10. Die Drahtvorschubvorrichtung 6 weist dabei eine Drahtspule 12 auf, wobei eine Drahtelektrode 14 von dieser Drahtspule 12 mittels eines Drahtfördersystems 16 abgezogen und zu dem Schweißbrenner 8 gefördert wird. Hierbei erfolgt die Förderung im Wesentlichen durch ein hier nicht dargestelltes Schlauchpaket. In diesem Schlauchpaket verlaufen zudem, ein erstes Versorgungskabel 18, welches über eine Kontaktdüse im Handschweißbrenner 8 die Drahtelektrode 14 mit Energie versorgt, Kühlkanäle zur Kühlung des Handschweißbrenners 8, eine Schutzgasleitung 20 sowie Steuerleitungen für die Steuerung der Schweißenergiequelle 4 und/oder der Drahtvorschubvorrichtung 6 mittels Bedienelement 22 am Schweißbrenner 8. Am Brennerausgang befindet sich eine Stromkontaktdüse, welche von einer Schutzgasdüse 24 umgeben ist. Ein zweites Versorgungskabel 26 stellt mittels der Kontaktzange 10 und einer Werkstückauflage 28 eine elektrische Verbindung zwischen der Schweißenergiequelle 4 und einem Werkstück 30 her.

Die Drahtvorschubvorrichtung 6 ist mit der Schweißenergiequelle 4 gekoppelt, derart, dass die Drahtförderung über eine Steuervorrichtung in der Schweißenergiequelle 4 gesteuert wird. Die Schutzgaszuführung erfolgt ausgehend von dem Schutzgasspeischer 2, welcher zur Druckregulierung mit einer Armatur 32 versehen ist, über die Schutzgasleitung 20 zum Handschweißbrenner 8, wobei die Schutzgaszufuhr über hier nicht dargestellte Steuerventile reguliert werden kann.

Die Schweißenergiequelle 4 umfasst insbesondere ein Leistungsteil hoher Leistung für die Erzeugung eines Lichtbogens 34 und zur Durchführung eines Schweißprozesses, wobei die Schweißenergiequelle 4 eine Spannung zur Verfügung stellt, welche überwacht wird, wodurch eine Berührung der Drahtelektrode 14 mit dem Werkstück 30 festgestellt werden kann.

Weiterhin weist die Schweißenergiequelle 4 eine Ein- und Ausgabevorrichtung auf, welche mit der Steuervorrichtung gekoppelt ist und mit deren Hilfe die Einstellung der Schweißparameter bzw. Betriebsarten erfolgen kann. Mittels einer geeigneten Messvorrichtung innerhalb der Schweißenergiequelle 4, werden die Istwerte des Schweißstromes und der Schweißspannung erfasst und an die Steuervorrichtung weitergeleitet.

Die maßgeblichen Parameter gemäß dem Ausführungsbeispiel dieser Erfindung sind Stromstärke I_{S}(t), Spannung U_{S}(t) und Drahtvorschubgeschwindigkeit V_{D}(t), wobei die Spannung U_{S} des Schweißkreises gemessen wird und bei Erreichen eines bestimmten voreinstellbaren Auslösewertes U_{P} die Stromstärke I_{S} ausgehend von einem ersten Vorgabewert, welcher charakteristisch für die Berührung der Drahtelektrode 14 mit dem Werkstück 30 ist, auf einen zweiten Vorgabewert geändert wird.

Der zeitliche Verlauf der Stromstärke I_{S}(t), Spannung U_{S}(t) und Drahtvorschubgeschwindigkeit V_{D}(t) ist in FIG 2 dargestellt, wobei V_{D}(t) den zeitlichen Verlauf der Fördergeschwindigkeit der Drahtelektrode 14 durch die Drahtvorschubvorrichtung 6 aufzeigt.

In einer ersten Phase (Phase 1) wird zunächst zwischen der Drahtelektrode 14 und dem Werkstück 30 eine Spannung U_{Sensor} angelegt, mit deren Hilfe sich eine Berührung der Drahtelektrode 14 feststellen lässt, indem die Spannung Uₛₑₙₛₒᵣ mittels der Messvorrichtung überwacht wird. Da während dieser Phase die Drahtelektrode 14 das Werkstück 30 noch nicht berührt, fließt folglich auch kein Strom I_{S}. Durch das Betätigen des Bedienelements 22 am Handschweißbrenner 8 wird die Drahtelektrode 14 auf das Werkstück 30 zubewegt und gestoppt, wenn diese das Werkstück 30 berührt.

Berührt die Elektrode 14 das Werkstück 30, so sinkt die Spannung U_{Sensor} auf einen minimalen Wert ab und eine zweite Phase (Phase 2) wird eingeleitet. Dieser Spannungsabfall wird messtechnisch erfasst und an die Steuervorrichtung weitergeleitet. In Folge der Berührung fließt ein Kurzschlussstrom I_{S}, welcher dem ersten Vorgabewert entspricht. Gleichzeitig fällt die Spannung U_{Sensor} auf einen Wert gegen Null ab. Die Strombegrenzung durch den ersten Vorgabewert soll dabei unter anderem ein Anhaften der Drahtelektrode 14 auf der Werkstückoberfläche verhindern. Während der zweiten Phase wird die Drahtelektrode 14 nicht durch die Drahtvorschubvorrichtung 6 bewegt.

Durch ein manuelles Zurückziehen 34b des Handschweißbrenners 8 und damit auch der Drahtelektrode 14 vom Werkstück 30, beginnt eine dritte Phase (Phase 3). Ein Lichtbogen 36 wird gezündet, wobei aufgrund der Begrenzung der Stromstärke I_{S}, gekennzeichnet durch den ersten Vorgabewert, keine oder nur eine unbedeutende Aufschmelzung der Drahtelektrode 14 und/oder des Grundwerkstoffs 30 erfolgt. Weiterhin wird dadurch das Zünden des Lichtbogens 36 spritzerarm durchgeführt.

Mit dem manuellen Zurückbewegen der Drahtelektrode 14 und der damit verbundenen Abstandsänderung zum Werkstück 30, ändert sich die Spannung U_{S} bei konstant gehaltenen Strom I_{S}, derart, dass die Spannung U_{S} mit größer werdendem Abstand ansteigt. Erreicht die Spannung U_{S} einen Wert U_{P}, erfolgt mittels der Steuervorrichtung, welche mit der Messvorrichtung gekoppelt ist, eine Änderung der Stromstärke I_{S} ausgehend vom ersten Vorgabewert auf einen zweiten Vorgabewert. Gleichzeitig wird durch die Steuervorrichtung, welche mit der Drahtvorschubvorrichtung 6 gekoppelt ist, die Drahtvorschubvorrichtung 6 eingeschaltet, so dass die Drahtelektrode 14 in Richtung 34a des Werkstücks 30 gefördert wird. Mit der Einleitung der Stromstärkeerhöhung steigt die Spannung U_{S} auf einen Wert U_{Schweiß} an.

Auch wenn die Auslösung der Stromstärkeänderung und Drahtförderung zeitgleich erfolgt, kann es system- und/oder bauartbedingt zu einer verzögerten resultierenden Drahtbewegung 34a am Ausgang der Düse 24 des Handschweißbrenners 8 kommen, so dass erst nach der Änderung des Vorgabewertes die Drahtelektrode 14 in Richtung 34a des Werkstücks bewegt wird. Die Verzögerung der Elektrodenbewegung kann beispielsweise durch ein zeitversetztes Einschalten der Drahtvorschubvorrichtung 6 nach oder vor Änderung der Stromstärke beeinflusst werden. Durch die Stromstärkeänderung vom ersten Vorgabewert auf den zweiten Vorgabewert wird ein Schweißprozess eingeleitet, welcher z.B. durch einen gepulsten oder kontinuierlichen Betrieb gekennzeichnet sein kann.

### Bezugszeichenliste

- 1: Vorrichtung zum MSG-Schweißen
- 2: Schutzgasspeicher
- 4: Schweißenergiequelle
- 6: Drahtvorschubvorrichtung
- 8: Handschweißbrenner
- 10: Kontaktzange
- 12: Drahtspule
- 14: Drahtelektrode
- 16: Drahtfördersystem
- 18: Versorgungskabel für Schweißbrenner
- 20: Schutzgasleitung
- 22: Bedienelement
- 24: Schutzgasdüse
- 26: Versorgungskabel für Werkstück
- 28: Werkstückauflage
- 30: Werkstück, Grundwerkstoff
- 32: Armatur
- 34a,34b: Bewegungsrichtung
- 36: Lichtbogen

## Patentansprüche

1. Verfahren zum manuellen Zünden eines Löt- oder Schweißlichtbogens (36), insbesondere für MIG/MAG-Schweißverfahren, mit einer lediglich in eine Richtung (34a) fördernden Drahtvorschubvorrichtung (6), bei der eine abschmelzende Drahtelektrode (14), welche von zumindest einer geregelten Energiequelle(4) mit Energie versorgt wird, in Richtung (34a) eines Werkstücks (30) bewegt wird, bis diese das Werkstück (30) berührt, wobei die Bewegung der Drahtelektrode (14) bei Berührung mit dem Werkstück (30) gestoppt wird und nachfolgend ein Strom- und/oder Spannungswert, ausgehend von einem ersten Vorgabewert, welcher charakteristisch für die Berührung der Drahtelektrode (14) mit dem Werkstück (30) ist, auf einen zweiten Vorgabewert geändert wird, wobei diese Strom- und/oder Spannungsänderung durch ein manuell bewirktes Zurückziehen der Drahtelektrode (14) vom Werkstück (30) ausgelöst wird.

2. Verfahren nach Anspruch 1, bei der die Drahtelektrode (14) durch einen Handschweißbrenner (8) geführt und/oder gehalten wird, wobei die Strom- und /oder die Spannungsänderung **dadurch** ausgelöst wird, indem der Handschweißbrenner (8) manuell vom Werkstück (30) wegbewegt wird.

3. Verfahren nach einem der Ansprüche 1 oder 2, bei dem der erste Vorgabewert so gering gehalten wird, dass keine nennenswerte Anschmelzung an der Drahtelektrode (14) und/oder am Werkstück (30) auftritt.

4. Verfahren nach Anspruch 1 bis 3, bei dem der zweite Vorgabewert entsprechend einem für einen Schweißvorgang charakteristischen Wert eingestellt wird.

5. Verfahren nach einem der Ansprüche 1 bis 4, bei dem für den Abstand der Drahtelektrode (14) zum Werkstück (30) charakteristische Strom- und/oder Spannungswerte erfasst werden.

6. Verfahren nach Anspruch 5, bei dem nach Erreichen eines bestimmten Wertes (U_{P}) die Strom- und/oder Spannungsänderung, ausgehend vom ersten Vorgabewert auf den zweiten Vorgabewert, ausgelöst wird.

7. Verfahren nach Anspruch 5, bei dem nach Erreichen eines bestimmten Wertes (U_{P}) die Drahtelektrode (14) mittels der Drahtvorschubvorrichtung (6) in Richtung (34a) des Werkstücks (30) bewegt wird.

8. Verfahren nach einem der Ansprüche 1 bis 7, bei dem die Bewegung der Drahtelektrode (14) zeitgleich mit dem Auslösen der Strom- und/oder Spannungsänderung erfolgt.

9. Verfahren nach einem der Ansprüche 1 bis 7, bei dem die Bewegung der Drahtelektrode (14) zeitversetzt nach dem Auslösen der Strom- und/oder Spannungsänderung erfolgt.

## Claims

1. Method for manually igniting a soldering or welding arc (36), in particular for MIG/MAG welding methods with a wire feeding device (6) for transportation in only one direction (34a), with a consumable wire electrode (14) that is supplied with energy from at least one regulated energy source (4) being moved in the direction (34a) of a workpiece (30) until said wire electrode touches the workpiece (30), with the movement of the wire electrode (14) being stopped upon contact with the workpiece (30) and then a current and/or voltage value, based on a first set value that is characteristic for contact of the wire electrode (14) with the workpiece (30), being changed to a second set value, with this current and/or voltage change being triggered by a manually activated withdrawal of the wire electrode (14) from the workpiece (30).

2. Method in accordance with Claim 1 wherein the wire electrode (14) is guided and/or held by a handheld welding torch (8), with the current and/or voltage change being triggered by the handheld welding torch (8) being moved manually away from the workpiece (30).

3. Method in accordance with either Claim 1 or 2, wherein the first set value is kept so low that no fusion on the wire electrode (14) and/or on the workpiece (30) worthy of mention occurs.

4. Method in accordance with any of Claims 1-3, wherein the second set value is set in accordance with a value that is characteristic for a welding process.

5. Method in accordance with any one of Claims 1-4, wherein current and/or voltage values that are characteristic for the distance between the wire electrode (14) and the workpiece (30) are measured.

6. Method in accordance with Claim 5, wherein the current and/or voltage change, based on the first set value to the second set value, is treated after reaching a certain value (Up).

7. Method in accordance with Claim 5, wherein the wire electrode (14) is moved by means of the wire feeding device (6) in the direction (34a) of the workpiece (30) when a certain value (Up) is reached.

8. Method in accordance with any one of Claims 1-7, wherein the movement of the wire electrode (14) occurs simultaneously with the actuation of the change in the current and/or voltage.

9. Method in accordance with any one of Claims 1-7, wherein the movement of the wire electrode (14) occurs with a time delay after the change in the current and/or voltage has been actuated.

## Revendications

1. Procédé pour l'allumage manuel d'un arc électrique de brasage ou de soudage (36), en particulier pour les procédés de soudage MIG/MAG, avec un dispositif d'avance de fil (6) avançant dans une seule direction (34a) dans lequel une électrode en fil fusible (14), alimentée en énergie par au moins une source d'énergie régulée (4), est déplacée dans la direction (34a) d'une pièce (30) jusqu'à ce qu'elle touche cette pièce (30), le mouvement de l'électrode en fil (14) étant arrêté quand elle touche la pièce (30) et une valeur d'intensité ou de tension étant ensuite modifiée, à partir d'une première valeur de consigne caractéristique du contact de l'électrode en fil (14) avec la pièce (30), à une deuxième valeur de consigne, le changement d'intensité et/ou de tension étant provoqué par un retrait manuel de l'électrode en fil (14) de la pièce (30).

2. Procédé selon la revendication 1, dans lequel l'électrode en fil (14) est guidée et/ou retenue par un chalumeau de soudage manuel (8), le changement d'intensité et/ou de tension étant provoqué par le fait que le chalumeau de soudage manuel (8) est écarté manuellement de la pièce (30).

3. Procédé selon l'une des revendications 1 ou 2, dans lequel la première valeur de consigne est maintenue suffisamment basse pour qu'il ne se produise aucun début de fusion notable sur l'électrode en fil (14) et/ou la pièce (30).

4. Procédé selon les revendications 1 à 3, dans lequel la deuxième valeur de consigne est réglée en fonction d'une valeur caractéristique d'une opération de soudage.

5. Procédé selon l'une des revendications 1 à 4, dans lequel des valeurs d'intensité et/ou de tension caractéristiques de la distance entre l'électrode en fil (14) et la pièce (30) sont captées.

6. Procédé selon la revendication 5, dans lequel le déclenchement se produit lorsque le changement d'intensité et/ou de tension de la première valeur de consigne à la deuxième valeur de consigne atteint une certaine valeur (U_{P}).

7. Procédé selon la revendication 5, dans lequel, après qu'une certaine valeur (U_{P}) a été atteinte, l'électrode en fil (14) est déplacée au moyen du dispositif d'avance de fil (6) dans la direction (34a) de la pièce (30).

8. Procédé selon l'une des revendications 1 à 7, dans lequel le déplacement de l'électrode en fil (14) s'effectue en même temps que le déclenchement du changement d'intensité et/ou de tension.

9. Procédé selon l'une des revendications 1 à 7, dans lequel le déplacement de l'électrode en fil (14) est décalé dans le temps après le déclenchement du changement d'intensité et/ou de tension.
